# EUROPEAN PATENT SPECIFICATION

(11) **EP 3 567 803 B1**
(45) Date of publication and mention of the grant of the patent: **30.12.2020**
(21) Application number: 18744251.2
(22) Date of filing: 19.01.2018
(51) Int. Cl.: H04L 12/24

(54) **STRATEGY MANAGEMENT METHOD, DEVICE, AND SYSTEM**
STRATEGIEVERWALTUNGSVERFAHREN, VORRICHTUNG UND SYSTEM
PROCÉDÉ, DISPOSITIF ET SYSTÈME DE GESTION DE STRATÉGIE

(30) Priority: 25.01.2017 CN 201710061358
(43) Date of publication of application: 13.11.2019
(73) Proprietor: Huawei Technologies Co., Ltd., Longgang District Shenzhen, Guangdong 518129 (CN)
(72) Inventor: XIA, Haitao, Shenzhen Guangdong 518129 (CN)
(74) Representative: Maiwald Patent- und Rechtsanwaltsgesellschaft mbH
(86) International application number: PCT/CN2018/073449
(87) International publication number: WO 2018/137572

(56) References cited:
- CN-A- 104 811 328
- CN-A- 105 656 646
- CN-A- 106 302 068
- US-A1- 2016 205 004
- AKIHIRO NAKAO 5GMF / THE UNIVERSITY OF TOKYO JAPAN: "Draft Technical Report: Report on application of network softwarization to IMT- 2020;IMT-O-041", ITU-T DRAFT; STUDY PERIOD 2017-2020; FOCUS GROUP IMT-2020; SERIES IMT-O-041, INTERNATIONAL TELECOMMUNICATION UNION, GENEVA ; CH , vol. imt-2020 6 January 2017 (2017-01-06), pages 1-146, XP044242643, Retrieved from the Internet: URL:https://extranet.itu.int/ITU-T/focusgr oups/imt-2020/Workspace/out.zip/O-041.docx [retrieved on 2017-01-06]
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,
- "3rd Generation Partnership Project; Technical Specification Group Services and System Aspects; Telecommunication management; Study on network management of virtualized networks (Release 13)", 3GPP DRAFT; 32842-120, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 6 July 2015 (2015-07-06), XP050986292, Retrieved from the Internet: URL:http://www.3gpp.org/ftp/tsg_sa/WG5_TM/ TSGS5_101/Docs/ [retrieved on 2015-07-06]

## Description

### TECHNICAL FIELD

This application relates to the field of communications technologies, and in particular, to a policy management method and system, and an apparatus applicable to an NFV field.

### BACKGROUND

In network function virtualization (NFV, Network Function Virtualization), a telecommunications network operator uses a virtualization technology in the information technology (IT, Information Technology) field to decouple software and hardware for implementation of some telecommunications network functions in a general-purpose cloud server, switch, and memory, to implement rapid and efficient deployment of a network service (NS, Network Service), and achieve an operation target of reducing a capital expenditure (CAPEX, Capital expenditure) and an operating expense (OPEX, operating expense). In this technology, the telecommunications network function needs to be implemented in a software manner, can run on hardware of a general-purpose server, and can be migrated, instantiated, and deployed at different physical locations of a network as required, and no new device needs to be installed.

The Article by AKIHIRO NAKAO 5GMF / THE UNIVERSITY OF TOKYO JAPAN, titled "Draft Technical Report: Report on application of network softwarization to IMT-2020;IMT-O-041", vol. imt-2020, (20170106), pages 1 - 146, published as ITU-T DRAFT; STUDY PERIOD 2017-2020; FOCUS GROUP IMT-2020; published on SERIES IMT-O-041, INTERNATIONAL TELECOMMUNICATION UNION, GENEVA; CH, describes and identifies relevant standardisation and regulatory bodies and describes the associated submissions and impact from the 5G PPP projects. D1 also presents a roadmap of relevant 5G standardization and regulatory topics and discusses the influences and meaning of these plans.

A scenario of providing an NS across management domains exists in deployment of a network service (Network Service, NS). This scenario may occur when a large service provider provides a global NS through cooperation of each branch, or a lease service of the NS is provided between different service providers by using a network sharing protocol. The global NS is referred to as a composite NS, the composite NS includes a plurality of nested NSs, and each nested NS is provided in a management domain different from that of the composite NS. In the scenario of providing a composite NS across management domains, policies of different levels or different policies of a same level may conflict with each other due to diversity of functional entities that generate or create the policies. Currently, an NFV MANO policy management technology is capable of performing only a management operation on a single policy. A policy of a composite NS and a policy of a nested NS are separately performed, and this cannot meet a policy management requirement in the scenario of providing a composite NS across management domains. Therefore, a new policy management method needs to be proposed.

### SUMMARY

The present invention is defined in the appended independent claims to which reference should be made.

Advantageous features are set out in the appended dependent claims.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic architectural diagram of a possible NFV system according to an embodiment of the present invention;
FIG. 2 is a schematic architectural diagram of a possible composite NS according to an embodiment of the present invention;
FIG. 3 is a schematic flowchart of creating a policy group according to an embodiment of the present invention;
FIG. 4 is a schematic flowchart of updating a member policy in a policy group according to an embodiment of the present invention;
FIG. 5 is a schematic flowchart of deleting a policy group member according to an embodiment of the present invention;
FIG. 6 is a schematic flowchart of activating a member policy in a policy group according to an embodiment of the present invention;
FIG. 7 is a schematic flowchart of deactivating a member policy in a policy group according to an embodiment of the present invention;
FIG. 8 is a schematic flowchart of deleting a policy group according to an embodiment of the present invention;
FIG. 9 is a schematic diagram of a computer device according to an embodiment of the present invention;
FIG. 10 is a schematic structural diagram of a policy decision entity according to an embodiment of the present invention; and
FIG. 11 is a schematic structural diagram of an NFVO in a management domain of a composite NS according to an embodiment of the present invention.

### DESCRIPTION OF EMBODIMENTS

The following describes the technical solutions in the embodiments of the present invention with reference to the accompanying drawings in the embodiments of the present invention. Network architectures and service scenarios described in the embodiments of the present invention are to describe the technical solutions in the embodiments of the present invention more clearly, but are not intended to limit the technical solutions provided in the embodiments of the present invention. A person of ordinary skill in the art may understand that, with evolution of the network architecture and appearance of a new service scenario, the technical solutions provided in the embodiments of the present invention may also be applicable to a similar technical solution.

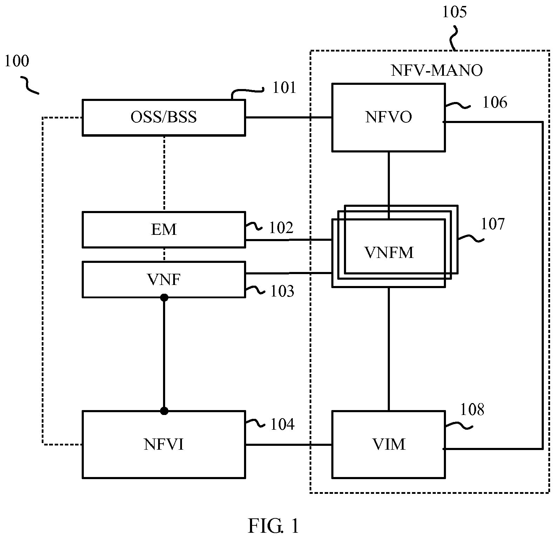

As shown in FIG. 1, a possible NFV system (100) includes an OSS/BSS (Operation Support System/Business Support System, operation support system/business support system) (101), an EMS (Element Management System, element management system) (102), a VNF (Virtualized Network Function, virtualized network function) (103), an NFVI (Network Function Virtualization Infrastructure, network function virtualization infrastructure) (104), and an NFV MANO (NFV Management and Orchestration, NFV management and orchestration) (105). The NFV MANO includes a plurality of management function entities: an NFVO (NFV Orchestrator, network function virtualization orchestrator) (106), a VNFM (Virtualized Network Function Manager, virtualized network function manager) (107), and a VIM (Virtualized Infrastructure Manager, virtualized infrastructure manager) (108).

The OSS/BSS (101) mainly provides a telecommunications service operator with an integrated network management and service operation function, including network management (for example, fault monitoring and network information collection), accounting management, policy management, customer service management, and the like. In this embodiment of the present invention, the OSS/BSS undertakes a function of a policy decision entity.

The NFVO (106) implements network service life cycle management (NS LCM, Network Service Life cycle Management), and cooperates with the VNFM to implement functions such as life cycle management of the VNF.

The VNFM (107) implements life cycle management of a virtualized network function VNF, including management and processing of a VNFD, initialization of a VNF instance, scaling out/in of the VNF, and termination of the VNF instance, and can receive a flexible scaling (scaling) policy delivered by the NFVO to implement flexible scaling of the VNF.

The VIM (108) is mainly responsible for management, monitoring, and fault reporting of a hardware resource and a virtualized resource at an infrastructure layer, and providing a virtualized resource pool for an upper-layer application.

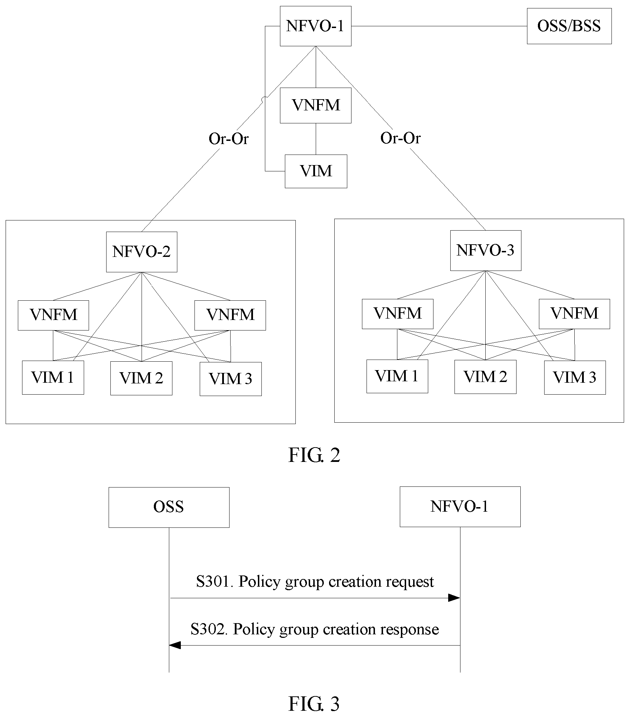

FIG. 2 shows a possible architecture of a composite NS provided across management domains, including a plurality of management domains. Each management domain includes a set of NFV MANO management function entities shown in FIG. 1. The NFVO is responsible for providing a network service and life cycle management of the network service in the management domain. A management domain in which an NFVO-2 is located provides an NS-A, a management domain in which an NFVO-3 is located provides an NS-B, and a management domain in which an NFVO-1 is located provides a composite NS in cooperation with the management domains in which the NFVO-2 and the NFVO-3 are located. In other words, the NS-A and the NS-B are components of the composite NS, and the NS-A and the NS-B are referred to as nested NSs. The NFVO-1, the NFVO-2, and the NFVO-3 form an umbrella-shaped management architecture. The NFVO-1 is responsible for life cycle management of the composite NS, the NFVO-2 and the NFVO-3 are responsible for life cycle management of their respective nested NSs, and the NFVO-1 communicates with the NFVO-2/the NFVO-3 through an Or-Or interface. For example, a network of a telecommunications operator with a relatively large scale has two layers of structures: one head office network and a plurality of subsidiary office networks. Each subsidiary office network has a management domain configured with an NFVO. An NFVO in the head office network is equivalent to the NFVO-1 in FIG. 2, and an NFVO in each subsidiary office network is equivalent to the NFVO-2 or the NFVO-3 in FIG. 2. When the telecommunications operator needs to provide a service for the head office network, for example, a VoLTE (Voice over LTE, voice over LTE) network service, the head office network may be designated to provide a user management and policy control network service forming the VoLTE, a subsidiary office network A provides an EPC (Evolved Packet Core, evolved packet core) network service forming the VoLTE, and a subsidiary office network B provides an IMS core network network service forming the VoLTE. Certainly, when the VoLTE network service is actually deployed, another network service in addition to the EPC network service and the IMS core network network service may further be required, or there may be another network service combination. Details are not described herein.

The policy decision entity in this application may be an OSS/BSS when being mapped to FIG. 2, or may be an independent policy manager. In the following embodiments of this application, the OSS is used as an example to describe how the policy decision entity performs cooperative policy management across management domains. The method is also applicable to a scenario in which the independent policy manager is used as the policy decision entity.

A composite NS architecture shown in FIG. 2 is used as an example. Management domains in which the composite NS, a nested NS-A, and a nested NS-B are located are configured with life cycle management policies of respective NSs. In this embodiment of the present invention, for example, an NS cure policy is used as a management policy, and it is assumed that NS cure policies of the management domains are respectively as follows:

A cure policy 1 of the composite NS: When receiving a virtual resource fault alarm of a severe fault level, the NFVO-1 migrates a member VNF instance (which does not include a member nested NS instance) of the composite NS instance to another available standby virtual machine.

A cure policy 2 of the nested NS-A: When receiving a virtual resource fault alarm of a severe fault level, the NFVO-2 migrates a member VNF instance of the nested NS instance to another available container.

A cure policy 3 of the nested NS-B: When detecting that a quantity of bytes sent/received by a virtual link per second is less than a preset threshold, the NFVO-3 migrates a member VNF instance of the nested NS instance to another available standby virtual machine.

It may be learned that because the composite NS and the nested NSs belong to different management domains, there is no unified policy design and planning between the management domains. To ensure policy consistency between the composite NS and the nested NSs, an LCM policy of the composite NS and LCM policies of the nested NSs need to be managed in a unified manner. A policy management method is proposed in this embodiment of the present invention. The LCM policy of the composite NS and the LCM policies of the nested NSs forming the composite NS are managed in a unified and cooperative manner as a policy group. The NFVO-1 in the management domain of the composite NS needs to perform an operation on the LCM policy of the composite NS in the management domain, and in addition, needs to trigger the NFVO-2 in the management domain of the nested NS forming the composite NS to cooperate to perform an operation on the LCM policy of the nested NS, to ensure consistency between the LCM policy of the composite NS and the LCM policy of the nested NS forming the composite NS. Under the unified and cooperative management, a policy conflict caused by separately setting and managing policies in the management domains is avoided, system maintenance efficiency is improved, and system running reliability and stability are ensured. The following further describes the technical solutions of the present invention by using the composite NS architecture shown in FIG. 2 and the NS cure policies of the foregoing management domains as an example.

FIG. 3 is a schematic flowchart of creating a policy group based on the system architecture of the composite NS shown in FIG. 2. The OSS in the figure undertakes a function of a policy decision entity. The NFVO-1 is located in a management domain of a composite NS, and undertakes a function of a policy execution entity in the management domain of the composite NS. Step S301: The OSS sends a policy group creation request message to the NFVO-1, where the request carries basic description information (Group Descriptor) of a to-be-created policy group, and identification information of each member policy forming the policy group. The identification information of the member policy includes an LCM policy identifier of one composite NS and LCM policy identifiers of one or more nested NSs forming the composite NS. It should be noted that identifiers of member policies need to be globally unique in the composite NS. In other words, the NFVO-1 can uniquely identify the policy. A numbering rule of the policy identifier is not within the scope of the technical solution of the present invention. Details are not described herein. The NFVO-1 receives the request message, allocates an identifier to the policy group, and records a correspondence between the identifier of the policy group and an identifier of a member policy in the policy group. In step S302, the NFVO-1 sends a policy group creation response message to the OSS, where the message carries information about a newly allocated identifier of the policy group. The OSS records the identifier, and subsequently instructs, by using the identifier of the policy group, the NFVO-1 to perform a cooperative operation on the member policy in the policy group. The foregoing NS cure policies in the management domains are used as an example. The created policy group is an NS cure policy group 1, and includes the following member policies: {a cure policy 1 of a composite NS, a cure policy 2 of a nested NS-A, and a cure policy 3 of a nested NS-B}.

It should be noted that, the policy group may be created by using the method shown in FIG. 3. The policy decision entity requests the NFVO-1 to create the policy group, or the policy group may be created by separately performing configuration on the policy decision entity and the NFVO-1. When the policy group is created in the configuration manner, it needs to be ensured that policy group configuration data of the policy decision entity is consistent with policy group configuration data of the NFVO-1, for example, consistency between the identifiers of the policy groups and consistency between the identifiers of the member policies in the policy groups.

After the policy group is created, the OSS may request the NFVO-1 to perform, on a per-policy group basis, a corresponding management operation on the member policy in the policy group based on a requirement.

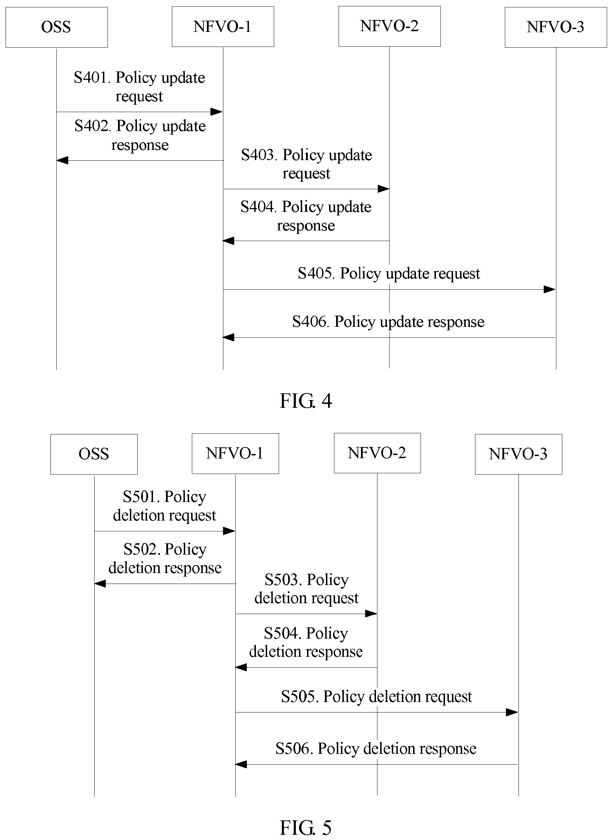

FIG. 4 is a schematic flowchart of performing, based on the system architecture of the composite NS shown in FIG. 2, cooperative policy update on the NS cure policy group 1 created in FIG. 3. In the figure, an OSS undertakes a function of a policy decision entity; when an NFVO-1 is located in a management domain of a composite NS; for the OSS, the NFVO-1 undertakes a function of a policy execution entity in the management domain of the composite NS; for an NFVO-2, the NFVO-1 implements a function of the OSS as a proxy and undertakes the function of the policy decision entity, to deliver a policy management operation request to the NFVO-2; when the NFVO-2 is located in a management domain of a nested NS-A, the NFVO-2 undertakes a function of a policy execution entity in the management domain of the nested NS-A; and when an NFVO-3 is located in a management domain of a nested NS-B, the NFVO-3 undertakes a function of a policy execution entity in the management domain of the nested NS-B. It may be learned from the foregoing descriptions of the cure policy 1 of the composite NS, the cure policy 2 of the nested NS-A, and the cure policy 3 of the nested NS-B that the NS cure policy in the management domain of the composite NS is different from the NS cure policy in the management domain of each associated nested NS. When a fault occurs on a network, decision conditions for performing NS cure are different in different management domains, or specific manners of performing cure are different, and as a result, a device status in the management domain of the composite NS may be different from that in the management domain of each nested NS. For example, some management domains have met a decision condition for an NS cure policy, and VNF instance migration has been started; but some management domains may not meet the decision condition for the NS cure policy. Consequently, that the composite NS provides a network service as a whole, or performs a life cycle maintenance operation of the network service as a whole may be probably affected. Therefore, it is necessary to update or modify all member policies in the policy group, to ensure consistency between the member policies.

Step S401: An OSS initiates a policy update request to an NFVO-1, where a request message includes an identifier of the cure policy 1 of the composite NS, an identifier of an NS cure policy group 1, and a policy update parameter. The policy update parameter includes a condition or an action for policy execution. For example, the condition for NS cure is "a virtual resource fault alarm of a severe fault level is received", and the action for NS cure is "a member VNF instance of the NS instance is migrated to another available standby virtual machine or an available container". It should be further noted that in this embodiment of the present invention, a policy management operation request message sent by the OSS to the NFVO-1 may not carry a policy identifier of the composite NS. In this case, because the NFVO-1 has recorded a correspondence between an identifier of a policy group and an identifier of a member policy in the policy group in a procedure of creating the policy group, the NFVO-1 may learn of the identifier of the member policy in the policy group by using the identifier of the policy group, and the identifier of the member policy includes the policy identifier of the composite NS.

Step S402: The NFVO-1 updates the cure policy 1 of the composite NS in the local management domain, and returns a policy update response to a policy manager, where the response message carries a result obtained after the cure policy 1 of the composite NS is updated.

Step S403: The NFVO-1 obtains an identifier of an LCM policy of the nested NS in the policy group based on an identifier of the NS cure policy group 1 received in step S401, namely, an identifier of the cure policy 2 of the nested NS-A and an identifier of the cure policy 3 of the nested NS-B; and then sends a policy update request message to the NFVO-2, where the policy update request message includes the identifier of the cure policy 2 of the nested NS-A and the policy update parameter, where the policy update parameter is consistent with the policy update parameter received by the NFVO-1 in step S401. It should be noted that the NFVO-1 may subscribe, to the NFVO-2 and the NFVO-3 by using an existing subscription notification mechanism, information about policy instances in the nested NS-A and the nested NS-B. In this way, NFVOs to which the cure policy 2 of the nested NS-A and the cure policy 3 of the nested NS-B belong may be learned of.

Step S404: The NFVO-2 updates the cure policy 2 of the nested NS-A based on the received policy update request message, and returns a policy update response message to the NFVO-1.

Step S405: Similar to step S403, the NFVO-1 initiates a policy update request message of the cure policy 3 of the nested NS-B to the NFVO-3, where the request message includes the identifier of the cure policy 3 of the nested NS-B and the policy update parameter. It should be noted that, in this embodiment of the present invention, cooperative policy management operations initiated by the NFVO-1 for management domains of a plurality of nested NSs forming the composite NS have no time sequence, namely, S403 and S405 have no time sequence. This processing principle is also applicable to messages in the following figure. Details are not described again.

Step S406: Similar to step S404, the NFVO-3 updates the cure policy 3 of the nested NS-B based on the received policy update request message, and returns a policy update response message to the NFVO-1.

Up to now, NS cure policies in the management domain of the composite NS and management domains of two nested NSs are updated. Member policies in the policy group are all updated, so that the LCM policy of the composite NS is consistent with the LCM policies of the nested NSs. An updated policy is as follows:

The cure policy 1 of the composite NS: When receiving a virtual resource fault alarm of a severe fault level, the NFVO-1 migrates a member VNF instance (which does not include a member nested NS instance) of the composite NS instance to another available standby virtual machine or an available container.

The cure policy 2 of the nested NS-A: When receiving a virtual resource fault alarm of a severe fault level, the NFVO-2 migrates a member VNF instance of the nested NS instance to another available standby virtual machine or an available container.

The cure policy 3 of the nested NS-B: When receiving a virtual resource fault alarm of a severe fault level, the NFVO-3 migrates a member VNF instance of the nested NS instance to another available standby virtual machine or an available container.

Compared with the solution in which the OSS separately initiates policy update to the NFVO-1, the NFVO-2, and the NFVO-3, in the solution of this embodiment, the policy execution entity NFVO-1 in the management domain of the composite NS shares a workload of the policy decision entity OSS. As a proxy of cooperative policy management, the NFVO-1 performs an operation on the policy in the local management domain, and in addition, triggers policy operation in the management domain of the nested NS. This improves policy management execution efficiency in a scenario of providing a composite NS across management domains, and ensures consistency between the LCM policy of the composite NS and the LCM policy of the nested NS in the policy group.

It should be noted that, after the policy update of a nested management domain in the policy group is completed, a notification message may be sent to the OSS, to notify the OSS of a policy update result of the nested management domain. The notification message may be sent by the NFVO-1 after step S406, or may be separately sent by the NFVO-2 and the NFVO-3 after the policy update of the nested management domain is completed. Certainly, the OSS may alternatively subscribe, to the NFVO in the management domain of the nested NS, status information of the policy by using an existing subscription notification mechanism. When the policy in the management domain of the nested NS is changed, the NFVO in the management domain of the nested NS sends a notification message to the OSS, to notify the OSS of a policy change status.

It should be further noted that, when the policy management operation request received by the NFVO in the management domain of the composite NS includes the identifier of the policy group, the identifier of the policy group may be used as an indication that the policy decision entity requires to perform a policy management operation on the member policy in the policy group, and directly initiates a policy management operation (for example, step S403 to step S406) on the LCM policy of the nested NS in the policy group. Alternatively, it may be determined, based on a local policy, whether to perform the policy management operation on the LCM policy of the nested NS in the policy group.

FIG. 5 is a schematic flowchart of performing cooperative deletion on a member policy in the foregoing NS cure policy group 1 based on the system architecture of the composite NS shown in FIG. 2. A function of a functional entity in FIG. 5 is the same as a function of the functional entity in FIG. 4. Details are not described again.

In step S501, an OSS sends a policy deletion request message to an NFVO-1 in a management domain of a composite NS, where the policy deletion request message includes an identifier of the NS cure policy group 1, and optionally, may further include an identifier of a cure policy 1 of the composite NS. The NFVO-1 deletes the cure policy 1 of the composite NS in the local management domain based on the request message, and separately sends a policy deletion request to an NFVO-2 and an NFVO-3, to request to delete a cure policy 2 of a nested NS-A and a cure policy 3 of a nested NS-B in the policy group. An identifier of the cure policy 2 of the nested NS-A and an identifier of the cure policy 3 of the nested NS-B are respectively carried in the policy deletion request message in S503 and S505. There is no time sequence between the messages in S503 and S505.

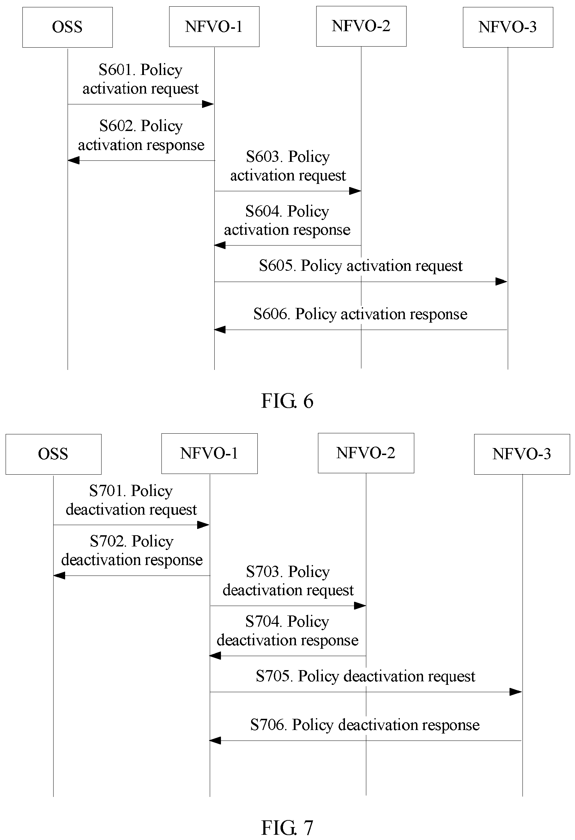

After a policy is created, the policy actually works provided that the policy is activated. FIG. 6 is a schematic flowchart of cooperatively activating a member policy in a policy group. An OSS cooperatively activates the member policy in the policy group by using an NFVO-1 without needing to separately send a policy activation request message to an NFVO-2 and an NFVO-3. FIG. 6 is a schematic flowchart of performing cooperative policy activation on an NS cure policy group 1 based on the system architecture of the composite NS shown in FIG. 2.

Step S601: The OSS initiates a policy activation request to the NFVO-1 in a management domain of a composite NS, to request to activate a cure policy 1 of the composite NS and a cure policy of a nested NS included in the NS cure policy group 1. The policy activation request command carries an identifier of the to-be-activated cure policy 1 of the composite NS and an identifier of the NS cure policy group 1.

Step S602: The NFVO-1 in the management domain of the composite NS returns a policy activation response to the OSS, where the response message carries a result of activating the cure policy 1 of the composite NS.

Step S603: The NFVO-1 in the management domain of the composite NS obtains, based on the received identifier of the NS cure policy group 1, an identifier of the cure policy of the nested NS that is in the policy group and that is associated with the cure policy 1 of the composite NS, and separately sends a policy activation command to the NFVO-2 and the NFVO-3 in step S603 and step S605, where the policy activation commands respectively carry an identifier of a cure policy 2 of a nested NS-A and an identifier of a cure policy 3 of a nested NS-B.

The NFVO-2 and the NFVO-3 in the management domains of the nested NSs return policy activation response messages to the NFVO-1 in the management domain of the composite NS in step S604 and step S606.

Likewise, the OSS may perform a cooperative policy deactivation operation on the policy group by using the NFVO-1. As shown in FIG. 7, a procedure of the cooperative policy deactivation operation is the same as that in FIG. 6. A difference is that a request and a response message in FIG. 7 are a deactivation request and a deactivation response message. A specific message procedure is not described again.

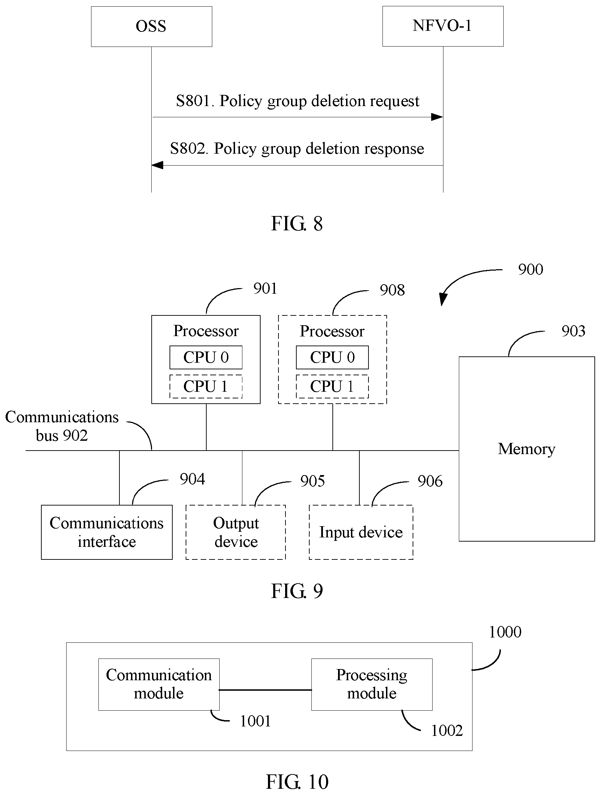

The policy decision entity may further send a policy group deletion request to the NFVO in the management domain of the composite NS to delete a created policy group, as shown in FIG. 8. In step S801, the policy decision entity requests the NFVO in the management domain of the composite NS to delete the policy group, where a request message carries an identifier of the policy group. The NFVO in the management domain of the composite NS deletes a record of the policy group that is locally recorded, and returns a policy group deletion response in step S802 to indicate a deleting result to the policy decision entity. This procedure may be performed when the policy decision entity does not need to maintain the policy group, for example, when a life cycle of the composite NS ends. Alternatively, when the policy decision entity needs to update a member policy in the policy group, the policy decision entity may first delete the policy group, and then create a policy group to update the member policy.

The foregoing mainly describes the solution provided in this embodiment of the present invention from a perspective of interaction between network elements. It may be understood that, to implement the foregoing functions, each function entity such as the OSS and the NFVO-1, includes a corresponding hardware structure and/or software module used to perform each function. A person of ordinary skill in the art should easily be aware that, in combination with the examples described in the embodiments disclosed in this specification, units, algorithms steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

For example, the policy decision entity (for example, the OSS) or the NFVO-1 entity in this embodiment of the present invention may be implemented by using a computer device (or a system) in FIG. 9. FIG. 9 is a schematic diagram of a computer device according to an embodiment of the present invention. The computer device 900 includes at least one processor 901, a communications bus 902, a memory 903, and at least one communications interface 904.

The processor 901 may be a general-purpose central processing unit (central processing unit, CPU), a microprocessor, an application-specific integrated circuit (application-specific integrated circuit, ASIC), or one or more integrated circuits used to control program execution of the solutions in the present invention.

The communications bus 902 may include a path in which information is transmitted between the foregoing components.

The communications interface 904, by using any apparatus such as a transceiver, is configured to communicate with another device or communications network, such as an Ethernet, a radio access network (radio access network, RAN), or a wireless local area network (wireless local area network, WLAN).

The memory 903 may be a read-only memory (read-only memory, ROM) or another type of static storage device that can store static information and instructions, a random access memory (random access memory, RAM) or another type of dynamic storage device that can store information and instructions; and may also be an electrically erasable programmable read-only memory (electrically erasable programmable read-only memory, EEPROM), a compact disc read-only memory (compact disc read-only memory, CD-ROM), or other compact disc storage, optical disc storage (including a compact disc, a laser disc, an optical disc, a digital versatile disc, a blue-ray disc, or the like), and a disk storage medium or another disk storage device, or any other medium that can be used to carry or store expected program code that has an instruction or digital structure form and that can be accessed by a computer. This is not limited herein. The memory may exist independently and is connected to the processor by using the bus. The memory may alternatively be integrated with the processor.

The memory 903 is configured to store application program code for performing the solution of the present invention, and execution of the application program code is controlled by the processor 901. The processor 901 is configured to execute the application program code stored in the memory 903, to implement the function in the method in this patent.

In specific implementation, in an embodiment, the processor 901 may include one or more CPUs such as a CPU 0 and a CPU 1 in FIG. 9.

In specific implementation, in an embodiment, the computer device 900 may include a plurality of processors such as a processor 901 and a processor 908 in FIG. 9. Each of these processors may be a single-core (single-CPU) processor or a multi-core (multi-CPU) processor. The processor herein may be one or more devices, circuits and/or processing cores used to process data (for example, a computer program instruction).

In specific implementation, in an embodiment, the computer device 900 may further include an output device 905 and an input device 906. The output device 905 communicates with the processor 901 and may display information in various manners. For example, the output device 905 may be a liquid crystal display (liquid crystal display, LCD), a light emitting diode (light emitting diode, LED) display device, a cathode ray tube (cathode ray tube, CRT) display device, or a projector (projector). The input device 906 communicates with the processor 901 and may receive input of a user in various manners. For example, the input device 906 may be a mouse, a keyboard, a touch panel device, or a sensing device.

The computer device 900 may be a general-purpose computer device or a special-purpose computer device. In specific implementation, the computer device 900 may be a desktop computer, a portable computer, a network server, a personal digital assistant (personal digital assistant, PDA), a mobile phone, a tablet computer, a wireless terminal device, a communications device, an embedded device, or a device having a structure similar to that shown in FIG. 8. A type of the computer device 900 is not limited in this embodiment of the present invention.

In this embodiment of the present invention, function module division may be performed on the policy decision entity or the NFVO in the management domain of the composite NS based on the method example in the method embodiment, for example, each function module may be divided based on each function, or two or more functions may be integrated in one function module. It should be noted that, in this embodiment of the present invention, unit division is an example, and is merely a logical function division. In actual implementation, another division manner may be used.

For example, FIG. 10 is a possible schematic structural diagram of a policy decision entity in the foregoing embodiment, and the policy decision entity is configured to complete functions related to the policy decision entity in all the foregoing method embodiments. The device 1000 includes a communication module 1001 and a processing module 1002.

The communication module 1001 is configured to send a request message to an NFVO in a management domain of a composite NS or receive a response message from the NFVO in the management domain of the composite NS.

The processing module 1002 is configured to: generate a policy management operation request message, and send the policy management operation request message by using the communication module, where the policy management operation request message includes an identifier of a policy group.

In a possible implementation, the processing module 1002 is further configured to generate a policy group creation or deletion request message, where the policy group creation request message includes an identifier of a member policy in the policy group, the member policy includes an LCM policy of one composite NS and LCM policies of one or more nested NSs forming the composite NS, and the policy group deletion request message includes the identifier of the policy group; and is further configured to: parse a policy group creation response message that is received by the communication module from the NFVO in the management domain of the composite NS, and record the identifier of the policy group included in the policy group creation response message.

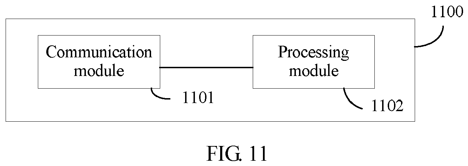

FIG. 11 is a possible schematic structural diagram of an NFVO in a management domain of a composite NS in the foregoing embodiment, and the NFVO is configured to complete functions related to the NFVO in the management domain of the composite NS in all the foregoing method embodiments. The device 1100 includes a communication module 1101 and a processing module 1102.

The communication module 1101 is configured to receive a policy group creation or deletion request message from a policy decision entity, is further configured to send a policy group creation or deletion response message to the policy decision entity, and is further configured to receive a policy management operation request message sent by the policy decision entity.

The processing module 1102 is configured to: parse the received policy management operation request message, determine, based on an identifier that is of a policy group and that is included in the policy management operation request message, an identifier of an LCM policy that is of a nested NS and that is included in the policy group, and generate a policy management operation request sent to an NFVO in a management domain of the nested NS, where the request message includes the identifier of the LCM policy of the nested NS.

In a possible implementation, the communication module 1101 of the NFVO in the management domain of the composite NS is further configured to receive the policy group creation or deletion request message from the policy decision entity, and is further configured to send the policy group creation or deletion response message to the policy decision entity. The processing module 1102 of the NFVO in the management domain of the composite NS is further configured to: parse the received policy group creation request message, create the policy group locally, and allocate the identifier to the policy group, where the policy group creation request message includes an identifier of a member policy in the policy group, and the member policy includes an LCM policy of one composite NS and LCM policies of one or more nested NSs forming the composite NS; and generate the response message for the policy group creation request, and send the response message to the policy decision entity by using the communication module, where the response message for the policy group creation request includes the identifier of the policy group. The processing module 1102 is further configured to parse the policy group deletion request message received by the communication module, and delete a corresponding policy group according to an identifier of the policy group in the request message.

The foregoing function module may be implemented in a form of hardware, or may be implemented in a form of a software function module. In a simple embodiment, a person skilled in the art may figure out that the policy decision entity 1000 or the NFVO 1100 in the management domain of the composite NS may be in a form shown in FIG 9. For example, the processing module 1002 in FIG 10 may be implemented by invoking code in the memory 903 by the processor 901 in FIG 9. This is not limited in this embodiment of the present invention.

The objectives, technical solutions, and beneficial effects of the present invention are further described in detail in the foregoing specific embodiments. A person skilled in the art should understand that the foregoing descriptions are merely specific embodiments of the present invention, but are not intended to limit the protection scope of the present invention.

## Claims

1. A policy management method, wherein the method is applied to a scenario of providing a composite Network Service, NS, across management domains, the composite NS comprises one or more nested NSs, the composite NS and the nested NS forming the composite NS are provided in different management domains; a Network Function Virtualization Orchestrator, NFVO, in a management domain of the composite NS is responsible for Life Cycle Management, LCM, of the composite NS, and an NFVO in a management domain of the nested NS is responsible for life cycle management of the nested NS, wherein the method comprises:
sending (301), by a policy decision entity, a first policy management operation request to the NFVO in the management domain of the composite NS, wherein the first policy management operation request comprises an identifier of a policy group; and
receiving, by the NFVO in the management domain of the composite NS, the first policy management operation request, determining, based on the identifier of the policy group, an identifier of an LCM policy that is of the nested NS and that is comprised in the policy group, and sending (302) a second policy management operation request to the NFVO in the management domain of the nested NS, wherein the second policy management operation request comprises the identifier of the LCM policy of the nested NS, wherein before the sending, by a policy decision entity, a first policy management operation request to the NFVO in the management domain of the composite NS, the method further comprises:
requesting, by the policy decision entity, the NFVO in the management domain of the composite NS to create a policy group, wherein the policy group creation requesting comprises an identifier of a member policy of the policy group, and the member policy comprises an LCM policy of one composite NS and LCM policies of one or more nested NSs forming the composite NS;
creating, by the NFVO in the management domain of the composite NS, the policy group based on the policy group creation requesting, allocating an identifier to the policy group, and sending a response message to the policy decision entity, wherein the response message comprises the identifier of the policy group; and
obtaining and recording, by the policy decision entity in the received response message that is for the policy group creation request and that is sent by the NFVO in the management domain of the composite NS, the identifier allocated to the policy group by the NFVO in the management domain of the composite NS.

2. The method according to claim 1, wherein the policy decision entity requests the NFVO in the management domain of the composite NS to delete a created policy group, and the policy group deletion request message comprises an identifier of a to-be-deleted policy group.

3. The method according to claim 1, wherein a type of policy management operation requested in the second policy management operation request is the same as a type of policy management operation requested in the first policy management operation request, and comprises any one of the following policy management operations: policy update, policy deletion, policy activation, or policy deactivation.

4. The method according to claim 3, wherein when the first policy management operation request is used as a policy update request, the request further comprises a policy update parameter, and the policy update parameter is applied to the member policy in the policy group.

5. A policy decision entity, applied to a scenario of providing a composite Network Service, NS, across management domains, wherein the composite NS comprises one or more nested NSs, the composite NS and the nested NS forming the composite NS are provided in different management domains, a Network Function Virtualization Orchestrator, NFVO, in a management domain of the composite NS is responsible for Life Cycle Management, LCM, of the composite NS, and the policy decision entity comprises:
a communications interface, configured to send, to the NFVO in the management domain of the composite NS, a first policy management operation request generated by a processor;
a memory, configured to store a computer executable instruction, an identifier of a policy group, and an identifier of a member policy comprised in the policy group; and
the processor, connected to the memory and the communications interface by using a bus and configured to: execute the computer executable instruction in the memory to generate the first policy management operation request, and send the first policy management operation request to the NFVO in the management domain of the composite NS through the communications interface, wherein the policy management operation request comprises the identifier of the policy group, wherein the identifier that is of the policy group and that is stored in the memory is allocated by the NFVO in the management domain of the composite NS based on a policy group creation request sent by the policy decision entity, and is returned to the policy decision entity by using a response message, which is specifically implemented as follows:
the communications interface is further configured to: send, to the NFVO in the management domain of the composite NS, a policy group creation request message generated by the processor, and receive a response message that is for the policy group creation request and that is sent by the NFVO in the management domain of the composite NS; and
the processor is further configured to execute the computer executable instruction in the memory to implement the following functions:
generating the policy group creation request message, and sending the policy group creation request message to the NFVO in the management domain of the composite NS through the communications interface, wherein the policy group creation request message comprises the identifier of the member policy in the policy group, and the member policy comprises an LCM policy of one composite NS and LCM policies of one or more nested NSs forming the composite NS; and
parsing the response message that is for the policy group creation request and that is received by the communications interface and sent by the NFVO in the management domain of the composite NS, parsing and obtaining the identifier allocated by the NFVO in the management domain of the composite NS to the policy group, and transmitting, by using the bus, the identifier of the policy group to the memory for storage.

6. The policy decision entity according to claim 5, wherein the processor is further configured to: generate a policy group deletion request message, and send the policy group deletion request message to the NFVO in the management domain of the composite NS through the communications interface, to request the NFVO in the management domain of the composite NS to delete a created policy group, wherein the policy group deletion request message comprises an identifier of a to-be-deleted policy group.

7. The policy decision entity according to any one of claims 5 to 6, wherein the first policy management operation request that is generated by the processor and that is sent to the NFVO in the management domain of the composite NS through the communications interface comprises any one of the following policy management operations: policy update, policy deletion, policy activation, or policy deactivation.

8. A Network Function Virtualization Orchestrator, NFVO, entity in a management domain of a composite Network Service, NS, applied to a scenario of providing a composite NS across management domains, wherein the composite NS comprises one or more nested NSs, the composite NS and the nested NS forming the composite NS are provided in different management domains; an NFVO in a management domain of the composite NS is responsible for Life Cycle Management, LCM, of the composite NS, an NFVO in a management domain of the nested NS is responsible for life cycle management of the nested NS, and the NFVO entity in a management domain of a composite NS comprises:
a communications interface, configured to: receive a first policy management operation request sent by a policy decision entity, and send, to the NFVO in the management domain of the nested NS, a second policy management operation request generated by a processor;
a memory, configured to store a computer executable instruction, an identifier of a policy group, and an identifier of a member policy comprised in the policy group; and
the processor, connected to the memory and the communications interface by using a bus and configured to: execute the computer executable instruction in the memory to parse the first policy management operation request, and determine, based on the identifier that is of the policy group and that is comprised in the first policy management operation request, an identifier of an LCM policy that is of a nested NS and that is comprised in the policy group, to generate the second policy management operation request, and send the second policy management operation request to the NFVO in the management domain of the nested NS through the communications interface, wherein the second policy management operation request comprises the identifier of the LCM policy of the nested NS, wherein the policy group is created by the NFVO in the management domain of the composite NS based on a request of the policy decision entity;
the communications interface is further configured to: receive a policy group creation request message sent by the policy decision entity, and return a response message for the policy group creation request to the policy decision entity; and
the processor is further configured to execute the computer executable instruction in the memory to implement the following functions:
parsing the received policy group creation request message, creating the policy group, and allocating an identifier to the policy group, wherein the policy group creation request message comprises the identifier of the member policy in the policy group, and the member policy comprises an LCM policy of one composite NS and LCM policies of one or more nested NSs forming the composite NS; and
generating the response message for the policy group creation request, and sending the response message to the policy decision entity through the communications interface, wherein the response message for the policy group creation request comprises the identifier of the policy group.

9. The NFVO entity in a management domain of a composite NS according to claim 8, wherein the communications interface is further configured to receive a policy group deletion request message sent by the policy decision entity, the policy group deletion request message comprises an identifier of a to-be-deleted policy group, and the processor deletes the corresponding policy group according to the identifier of the policy group.

10. The NFVO entity in a management domain of a composite NS according to claim 8 or 9, wherein a type of policy management operation requested in the second policy management operation request is the same as a type of policy management operation requested in the first policy management operation request, and comprises any one of the following policy management operations: policy update, policy deletion, policy activation, or policy deactivation.

11. A policy management system, comprising the policy decision entity according to any one of claims 5 to 7 and the Network Function Virtualization Orchestrator, NFVO, entity in a management domain of a composite Network Service, NS, according to any one of claims 8 to 10.

12. A computer readable storage medium, comprising an instruction, wherein when the instruction runs on a computer, the computer performs the method related to the policy decision entity or the Network Function Virtualization Orchestrator, NFVO, entity in a management domain of a composite Network Service, NS, according to claims 1 to 4.

## Patentansprüche

1. Richtlinienverwaltungsverfahren, wobei das Verfahren auf ein Szenario der Bereitstellung eines zusammengesetzten Netzwerkdienstes (*Network Service* - NS) über Verwaltungsdomänen hinweg angewandt wird, wobei der zusammengesetzte NS einen oder mehrere verschachtelte NS umfasst, wobei der zusammengesetzte NS und der verschachtelte NS, der den zusammengesetzten NS bildet, in verschiedenen Verwaltungsdomänen bereitgestellt werden;
wobei ein Netzfunktionsvirtualisierungsorchestrator (*Network Function Virtualization Orchestrator-* NFVO) in einer Verwaltungsdomäne des zusammengesetzten NS für eine Lebenszyklusverwaltung (*Life Cycle Management -* LCM) des zusammengesetzten NS zuständig ist, und ein NFVO in einer Verwaltungsdomäne des verschachtelten NS für eine Lebenszyklusverwaltung des verschachtelten NS verantwortlich ist, wobei das Verfahren Folgendes umfasst:
Senden (301), durch eine Richtlinienentscheidungsentität, einer ersten Richtlinienverwaltungsvorgangsanforderung an den NFVO in der Verwaltungsdomäne des zusammengesetzten NS, wobei die erste Richtlinienverwaltungsvorgangsanforderung eine Kennung einer Richtliniengruppe umfasst; und
Empfangen, durch den NFVO in der Verwaltungsdomäne des zusammengesetzten NS, der ersten Richtlinienverwaltungsvorgangsanforderung, Bestimmen, auf der Grundlage der Kennung der Richtliniengruppe, einer Kennung einer LCM-Richtlinie, die zum verschachtelten NS gehört und die in der Richtliniengruppe enthalten ist, und Senden (302) einer zweiten Richtlinienverwaltungsvorgangsanforderung an den NFVO in der Verwaltungsdomäne des verschachtelten NS, wobei die zweite Richtlinienverwaltungsvorgangsanforderung die Kennung der LCM-Richtlinie des verschachtelten NS umfasst, wobei das Verfahren vor dem Senden einer ersten Richtlinienverwaltungsvorgangsanforderung durch eine Richtlinienentscheidungsentität an den NFVO in der Verwaltungsdomäne des zusammengesetzten NS ferner Folgendes umfasst:
Anfordern, durch die Richtlinienentscheidungsentität, des NFVO in der Verwaltungsdomäne des zusammengesetzten NS, um eine Richtliniengruppe zu erstellen, wobei die Anforderung zur Erstellung der Richtliniengruppe eine Kennung einer Mitgliederrichtlinie der Richtliniengruppe umfasst und wobei die Mitgliederrichtlinie eine LCM-Richtlinie eines zusammengesetzten NS und LCM-Richtlinien eines oder mehrerer verschachtelter NS umfasst, die das zusammengesetzte NS bilden;
Erstellen, durch den NFVO in der Verwaltungsdomäne des zusammengesetzten NS, der Richtliniengruppe auf der Grundlage der Anforderung zur Erstellung der Richtliniengruppe, Zuweisen einer Kennung an die Richtliniengruppe und Senden einer Antwortnachricht an die Richtlinienentscheidungsentität, wobei die Antwortnachricht die Kennung der Richtliniengruppe umfasst; und
Erhalten und Aufzeichnen, durch die Richtlinienentscheidungsentität in der empfangenen Antwortnachricht, die für die Anfrage zur Erstellung der Richtliniengruppe bestimmt ist und die vom NFVO in der Verwaltungsdomäne des zusammengesetzten NS gesendet wird, der Kennung, die der Richtliniengruppe vom NFVO in der Verwaltungsdomäne des zusammengesetzten NS zugewiesen wurde.

2. Verfahren nach Anspruch 1, wobei die Richtlinienentscheidungsentität den NFVO in der Verwaltungsdomäne des zusammengesetzten NS auffordert, eine erstellte Richtliniengruppe zu löschen, und wobei die Richtliniengruppenlöschungsanforderungsnachricht eine Kennung einer zu löschenden Richtliniengruppe umfasst.

3. Verfahren nach Anspruch 1, wobei ein Typ eines Richtlinienverwaltungsvorgangs, der in der zweiten Richtlinienverwaltungsvorgangsanforderung angefordert wird, derselbe ist wie ein Typ eines Richtlinienverwaltungsvorgangs, der in der ersten Richtlinienverwaltungsvorgangsanforderung angefordert wird, und einen der folgenden Richtlinienverwaltungsvorgänge umfasst:
Richtlinienaktualisierung, Richtlinienlöschung, Richtlinienaktivierung oder Richtliniendeaktivierung.

4. Verfahren nach Anspruch 3, wobei, wenn die erste Richtlinienverwaltungsvorgangsanforderung als eine Richtlinienaktualisierungsanforderung verwendet wird, die Anforderung ferner einen Richtlinienaktualisierungsparameter umfasst und wobei der Richtlinienaktualisierungsparameter auf die Mitgliederrichtlinie in der Richtliniengruppe angewendet wird.

5. Richtlinienentscheidungsentität, angewandt auf ein Szenario der Bereitstellung eines zusammengesetzten Netzwerkdienstes (NS) über Verwaltungsdomänen hinweg, wobei der zusammengesetzte NS einen oder mehrere verschachtelte NS umfasst, wobei der zusammengesetzte NS und der verschachtelte NS, der den zusammengesetzten NS bildet, in verschiedenen Verwaltungsdomänen bereitgestellt werden, wobei ein Netzfunktionsvirtualisierungsorchestrator (NFVO) in einer Verwaltungsdomäne des zusammengesetzten NS für die Lebenszyklusverwaltung (LCM) des zusammengesetzten NS zuständig ist und wobei die Richtlinienentscheidungsentität Folgendes umfasst:
eine Kommunikationsschnittstelle, die so konfiguriert ist, dass sie an den NFVO in der Verwaltungsdomäne des zusammengesetzten NS eine erste von einem Prozessor generierte Richtlinienverwaltungsvorgangsanforderung sendet;
einen Speicher, der so konfiguriert ist, dass er einen ausführbaren Computerbefehl, eine Kennung einer Richtliniengruppe und eine Kennung einer in der Richtliniengruppe enthaltenen Mitgliederrichtlinie speichert; und
wobei der Prozessor unter Verwendung eines Busses mit dem Speicher und der Kommunikationsschnittstelle verbunden ist und für Folgendes konfiguriert ist:
Ausführen des computerausführbaren Befehls im Speicher, um die erste Richtlinienverwaltungsvorgangsanforderung zu erzeugen, und Senden der ersten Richtlinienverwaltungsvorgangsanforderung an den NFVO in der Verwaltungsdomäne der zusammengesetzten NS über die Kommunikationsschnittstelle, wobei die Richtlinienverwaltungsvorgangsanforderung die Kennung der Richtliniengruppe umfasst, wobei die Kennung, die zur Richtliniengruppe gehört und im Speicher gespeichert ist, vom NFVO in der Verwaltungsdomäne der zusammengesetzten NS auf der Grundlage einer von der Richtlinienentscheidungsentität gesendeten Richtliniengruppenerstellungsanforderung zugewiesen und an die Richtlinienentscheidungsentität unter Verwendung einer Antwortnachricht zurückgesendet wird, die speziell wie folgt implementiert ist:
wobei die Kommunikationsschnittstelle ferner für Folgendes konfiguriert ist:
Senden, an den NFVO in der Verwaltungsdomäne des zusammengesetzten NS, einer vom Prozessor generierten Richtliniengruppenerstellungsnachricht, und Empfangen einer Antwortnachricht, die für die Richtliniengruppenerstellungsanforderung bestimmt ist und die vom NFVO in der Verwaltungsdomäne des zusammengesetzten NS gesendet wird; und
wobei der Prozessor ferner so konfiguriert ist, dass er den computerausführbaren Befehl im Speicher ausführt, um die folgenden Funktionen zu implementieren:
Erzeugen der Richtliniengruppenerstellungsanforderungsnachricht und Senden der Richtliniengruppenerstellungsanforderungsnachricht an den NFVO in der Verwaltungsdomäne des zusammengesetzten NS über die Kommunikationsschnittstelle, wobei die Richtliniengruppenerstellungsanforderungsnachricht die Kennung der Mitgliederrichtlinie in der Richtliniengruppe umfasst und die Mitgliederrichtlinie eine LCM-Richtlinie eines zusammengesetzten NS und LCM-Richtlinien eines oder mehrerer verschachtelter NS umfasst, die den zusammengesetzten NS bilden; und
Parsen der Antwortnachricht, die für die Richtliniengruppenerstellungsnachricht bestimmt ist und die von der Kommunikationsschnittstelle empfangen und vom NFVO in der Verwaltungsdomäne des zusammengesetzten NS gesendet wird, Parsen und Abrufen der Kennung, die durch den NFVO in der Verwaltungsdomäne des zusammengesetzten NS der Richtliniengruppe zugewiesen wird, und Übertragen der Kennung der Richtliniengruppe unter Verwendung des Bus zur Speicherung in den Speicher.

6. Richtlinienentscheidungsentität nach Anspruch 5, wobei der Prozessor ferner für Folgendes konfiguriert ist:
Erzeugen einer Richtliniengruppenlöschungsanforderungsnachricht und Senden der Richtliniengruppenlöschungsanforderungsnachricht an den NFVO in der Verwaltungsdomäne der zusammengesetzten NS über die Kommunikationsschnittstelle, um das NFVO in der Verwaltungsdomäne des zusammengesetzten NS aufzufordern, eine erzeugte Richtliniengruppe zu löschen, wobei die Richtliniengruppenlöschungsanforderungsnachricht eine Kennung einer zu löschenden Richtliniengruppe umfasst.

7. Richtlinienentscheidungsentität nach einem der Ansprüche 5 bis 6, wobei die erste Richtlinienverwaltungsvorgangsanforderung, die vom Prozessor erzeugt und über die Kommunikationsschnittstelle an den NFVO in der Verwaltungsdomäne der zusammengesetzten NS gesendet wird, einen der folgenden Richtlinienverwaltungsvorgänge umfasst:
Richtlinienaktualisierung, Richtlinienlöschung, Richtlinienaktivierung oder Richtliniendeaktivierung.

8. Netzfunktionsvirtualisierungsorchestrator(NFVO)einheit in einer Verwaltungsdomäne eines zusammengesetzten Netzwerkdienstes (NS), angewendet auf ein Szenario der Bereitstellung eines zusammengesetzten NS über Verwaltungsdomänen hinweg, wobei der zusammengesetzte NS einen oder mehrere verschachtelte NS umfasst, wobei der zusammengesetzte NS und der verschachtelte NS, der den zusammengesetzten NS bildet, in verschiedenen Verwaltungsdomänen bereitgestellt werden;
wobei ein NFVO in einer Verwaltungsdomäne des zusammengesetzten NS für die Lebenszyklusverwaltung (LCM) des zusammengesetzten NS zuständig ist, wobei ein NFVO in einer Verwaltungsdomäne des verschachtelten NS für die Lebenszyklusverwaltung des verschachtelten NS zuständig ist, und wobei die NFVO-Entität in einer Verwaltungsdomäne eines zusammengesetzten NS Folgendes umfasst:
eine Kommunikationsschnittstelle, die für Folgendes konfiguriert ist:
Empfangen einer ersten Richtlinienverwaltungsvorgangsanforderung, die von einer Richtlinienentscheidungsentität gesendet wurde, und Senden, an den NFVO in der Verwaltungsdomäne der verschachtelten NS, einer zweiten Richtlinienverwaltungsvorgangsanforderung, die von einem Prozessor erzeugt wurde;
einen Speicher, der so konfiguriert ist, dass er einen ausführbaren Computerbefehl, eine Kennung einer Richtliniengruppe und eine Kennung einer in der Richtliniengruppe enthaltenen Mitgliederrichtlinie speichert; und
wobei der Prozessor unter Verwendung eines Busses mit dem Speicher und der Kommunikationsschnittstelle verbunden ist und für Folgendes konfiguriert ist:
Ausführen des computerausführbaren Befehls im Speicher, um die erste Richtlinienverwaltungsvorgangsanforderung zu parsen, und Bestimmen, auf der Grundlage der Kennung, die zur Richtliniengruppe gehört und in der ersten Richtlinienverwaltungsvorgangsanforderung enthalten ist, einer Kennung einer LCM-Richtlinie, die zu einer verschachtelten NS gehört und in der Richtliniengruppe enthalten ist, um die zweite Richtlinienverwaltungsvorgangsanforderung zu erzeugen, und Senden der zweiten Richtlinienverwaltungsvorgangsanforderung an den NFVO in der Verwaltungsdomäne der verschachtelten NS über die Kommunikationsschnittstelle, wobei die zweite Richtlinienverwaltungsvorgangsanforderung die Kennung der LCM-Richtlinie des verschachtelten NS umfasst, wobei die Richtliniengruppe vom NFVO in der Verwaltungsdomäne des zusammengesetzten NS auf der Grundlage einer Anforderung der Richtlinienentscheidungsentität erstellt wird;
wobei die Kommunikationsschnittstelle ferner für Folgendes konfiguriert ist:
Empfangen einer Richtliniengruppenerstellungsnachricht, die von der Richtlinienentscheidungsentität gesendet wurde, und Zurücksenden einer Antwortnachricht für die Richtliniengruppenerstellungsanforderung an die Richtlinienentscheidungsentität; und
wobei der Prozessor ferner so konfiguriert ist, dass er den computerausführbaren Befehl im Speicher ausführt, um die folgenden Funktionen zu implementieren:
Parsen der empfangenen Richtliniengruppenerstellungsnachricht, Erstellen der Richtliniengruppe und Zuweisen einer Kennung an die Richtliniengruppe, wobei die Richtliniengruppenerstellungsnachricht die Kennung der Mitgliederrichtlinie in der Richtliniengruppe umfasst und die Mitgliederrichtlinie eine LCM-Richtlinie einer zusammengesetzten NS und LCM-Richtlinien eines oder mehrerer verschachtelter NS umfasst, die den zusammengesetzten NS bilden; und
Erzeugen der Antwortnachricht für die Richtliniengruppenerstellungsanforderung und Senden der Antwortnachricht an die Richtlinienentscheidungsentität über die Kommunikationsschnittstelle, wobei die Antwortnachricht für die Richtliniengruppenerstellungsanforderung die Kennung der Richtliniengruppe umfasst.

9. NFVO-Entität in einer Verwaltungsdomäne eines zusammengesetzten NS nach Anspruch 8, wobei die Kommunikationsschnittstelle ferner so konfiguriert ist, dass sie eine Richtliniengruppenlöschungsanforderungsnachricht empfängt, die von der Richtlinienentscheidungsentität gesendet wird, wobei die Richtliniengruppenlöschungsanforderungsnachricht eine Kennung einer zu löschenden Richtliniengruppe umfasst und der Prozessor die entsprechende Richtliniengruppe gemäß der Kennung der Richtliniengruppe löscht.

10. NFVO-Entität in einer Verwaltungsdomäne eines zusammengesetzten NS nach Anspruch 8 oder 9, wobei ein Typ eines Richtlinienverwaltungsvorgangs, der in der zweiten Richtlinienverwaltungsvorgangsanforderung angefordert wird, derselbe ist wie ein Typ eines Richtlinienverwaltungsvorgangs, der in der ersten Richtlinienverwaltungsvorgangsanforderung angefordert wird, und einen der folgenden Richtlinienverwaltungsvorgänge umfasst:
Richtlinienaktualisierung, Richtlinienlöschung, Richtlinienaktivierung oder Richtliniendeaktivierung.

11. Richtlinienverwaltungssystem, umfassend die Richtlinienentscheidungsentität nach einem der Ansprüche 5 bis 7 und die Netzfunktionsvirtualisierungsorchestrator(NFVO)entität in einer Verwaltungsdomäne eines zusammengesetzten Netzwerkdienstes (NS) nach einem der Ansprüche 8 bis 10.

12. Computerlesbares Speichermedium, umfassend einen Befehl, wobei, wenn der Befehl auf einem Computer abläuft, der Computer das Verfahren in Bezug auf die Richtlinienentscheidungsentität oder die Netzfunktionsvirtualisierungsorchestrator(NFVO)entität in einer Verwaltungsdomäne eines zusammengesetzten Netzwerkdienstes (NS) nach Anspruch 1 bis 4 ausführt.

## Revendications

1. Procédé de gestion de politique, dans lequel le procédé est appliqué à un scénario de fourniture d'un service de réseau, NS, composite à travers des domaines de gestion, le NS composite comprend un ou plusieurs NS imbriqué(s), le NS composite et le NS imbriqué formant le NS composite sont fournis dans différents domaines de gestion ; un orchestrateur de virtualisation des fonctions réseau, NFVO, dans un domaine de gestion du NS composite est chargé de la gestion du cycle de vie, LCM, du NS composite, et un NFVO dans un domaine de gestion du NS imbriqué est chargé de la gestion du cycle de vie du NS imbriqué, dans lequel le procédé comprend : l'envoi (301), par une entité de décision de politique, d'une première demande d'opération de gestion de politique au NFVO dans le domaine de gestion du NS composite, la première demande d'opération de gestion de politique comprenant un identifiant d'un groupe de politiques ; et
la réception, par le NFVO dans le domaine de gestion du NS composite, de la première demande d'opération de gestion de politique, en déterminant, sur la base de l'identifiant du groupe de politiques, un identifiant d'une politique de LCM qui appartient au NS imbriqué et qui est compris dans le groupe de politiques, et l'envoi (302) d'une seconde demande d'opération de gestion de politique au NFVO dans le domaine de gestion du NS imbriqué, dans lequel la seconde demande d'opération de gestion de politique comprend l'identifiant de la politique de LCM du NS imbriqué, dans lequel avant l'envoi, par une entité de décision de politique, d'une première demande d'opération de gestion de politique adressée au NFVO dans le domaine de gestion du NS composite, le procédé comprend en outre : la demande, par l'entité de décision de politique, au NFVO dans le domaine de gestion du NS composite de créer un groupe de politiques, dans lequel la demande de création de groupe de politiques comprend un identifiant d'une politique membre du groupe de politiques, et la politique membre comprend une politique de LCM d'un NS composite et des politiques de LCM d'un ou de plusieurs NS imbriqué(s) formant le NS composite ;
la création, par le NFVO dans le domaine de gestion du NS composite, du groupe de politiques sur la base de la demande de création de groupe de politiques, l'attribution d'un identifiant au groupe de politiques et l'envoi d'un message de réponse à l'entité de décision de politique, le message de réponse comprenant l'identifiant du groupe de politiques ; et
l'obtention et l'enregistrement, par l'entité de décision de politique dans le message de réponse reçu qui est destiné à la demande de création de groupe de politiques et qui est envoyé par le NFVO dans le domaine de gestion du NS composite, de l'identifiant attribué au groupe de politiques par le NFVO dans le domaine de gestion du NS composite.

2. Procédé selon la revendication 1, dans lequel l'entité de décision de politique demande au NFVO dans le domaine de gestion du NS composite de supprimer un groupe de politiques créé, et le message de demande de suppression de groupe de politiques comprend un identifiant d'un groupe de politiques à supprimer.

3. Procédé selon la revendication 1, dans lequel un type d'opération de gestion de politique demandé dans la seconde demande d'opération de gestion de politique est le même qu'un type d'opération de gestion de politique demandé dans la première demande d'opération de gestion de politique, et comprend l'une quelconque des opérations de gestion de politique suivantes : la mise à jour de politique, la suppression de politique, l'activation de politique ou la désactivation de politique.

4. Procédé selon la revendication 3, dans lequel lorsque la première demande d'opération de gestion de politique est utilisée en tant que demande de mise à jour de politique, la demande comprend en outre un paramètre de mise à jour de politique, et le paramètre de mise à jour de politique est appliqué à la politique membre dans le groupe de politiques.

5. Entité de décision de politique, appliquée à un scénario de fourniture d'un service de réseau, NS, composite à travers des domaines de gestion, dans laquelle le NS composite comprend un ou plusieurs NS imbriqué(s), le NS composite et le NS imbriqué formant le NS composite sont fournis dans différents domaines de gestion, un orchestrateur de virtualisation des fonctions réseau, NFVO, dans un domaine de gestion du NS composite est chargé de la gestion du cycle de vie, LCM, du NS composite, et l'entité de décision de politique comprend : une interface de communication, configurée pour envoyer, au NFVO dans le domaine de gestion du NS composite, une première demande d'opération de gestion de politique générée par un processeur ;
une mémoire, configurée pour stocker une instruction exécutable par ordinateur, un identifiant d'un groupe de politiques et un identifiant d'une politique membre comprise dans le groupe de politiques ; et
le processeur, connecté à la mémoire et à l'interface de communication à l'aide d'un bus et configuré pour : exécuter l'instruction exécutable par ordinateur dans la mémoire pour générer la première demande d'opération de gestion de politique, et envoyer la première demande d'opération de gestion de politique au NFVO dans le domaine de gestion du NS composite par le biais de l'interface de communication, dans lequel la demande d'opération de gestion de politique comprend l'identifiant du groupe de politiques, dans lequel l'identifiant qui appartient au groupe de politiques et qui est stocké dans la mémoire est attribué par le NFVO dans le domaine de gestion du NS composite sur la base d'une demande de création de groupe de politiques envoyée par l'entité de décision de politique, et est renvoyé à l'entité de décision de politique à l'aide d'un message de réponse, qui est particulièrement mis en œuvre comme suit : l'interface de communication est en outre configurée pour : envoyer, au NFVO dans le domaine de gestion du NS composite, un message de demande de création de groupe de politiques généré par le processeur, et recevoir un message de réponse destiné à la demande de création de groupe de politiques et envoyé par le NFVO dans le domaine de gestion du NS composite ; et
le processeur est en outre configuré pour exécuter l'instruction exécutable par ordinateur dans la mémoire afin de mettre en œuvre les fonctions suivantes : la génération du message de demande de création de groupe de politiques et l'envoi du message de demande de création de groupe de politiques au NFVO dans le domaine de gestion du NS composite par le biais de l'interface de communication, le message de demande de création de groupe de politiques comprenant l'identifiant de la politique membre dans le groupe de politiques, et la politique membre comprend une politique de LCM d'un NS composite et des politiques de LCM d'un ou de plusieurs NS imbriqué(s) formant le NS composite ; et
l'analyse du message de réponse qui est destiné à la demande de création de groupe de politiques et qui est reçu par l'interface de communication et envoyé par le NFVO dans le domaine de gestion du NS composite, l'analyse et l'obtention de l'identifiant attribué par le NFVO dans le domaine de gestion du NS composite au groupe de politiques, et la transmission, à l'aide du bus, de l'identifiant du groupe de politiques à la mémoire pour stockage.

6. Entité de décision de politique selon la revendication 5, dans laquelle le processeur est en outre configuré pour : générer un message de demande de suppression de groupe de politiques et envoyer le message de demande de suppression de groupe de politiques au NFVO dans le domaine de gestion du NS composite par le biais de l'interface de communication, pour demander au NFVO dans le domaine de gestion du NS composite de supprimer un groupe de politiques créé, le message de demande de suppression de groupe de politiques comprenant un identifiant d'un groupe de politiques à supprimer.

7. Entité de décision de politique selon l'une quelconque des revendications 5 à 6, dans laquelle la première demande d'opération de gestion de politique qui est générée par le processeur et qui est envoyée au NFVO dans le domaine de gestion du NS composite par le biais de l'interface de communication comprend l'une quelconque parmi les opérations de gestion de politique suivantes : la mise à jour de politique, la suppression de politique, l'activation de politique ou la désactivation de politique.

8. Entité d'orchestrateur de virtualisation des fonctions réseau, NFVO, dans un domaine de gestion d'un service de réseau, NS, composite appliqué à un scénario de fourniture d'un NS composite sur des domaines de gestion, dans laquelle le NS composite comprend un ou plusieurs NS imbriqué(s), le NS composite et les NS imbriqués formant le NS composite sont fournis dans différents domaines de gestion ;
un NFVO dans un domaine de gestion du NS composite est chargé de la gestion du cycle de vie, LCM, du NS composite, un NFVO dans un domaine de gestion du NS imbriqué est chargé de la gestion du cycle de vie du NS imbriqué, et l'entité NFVO dans un domaine de gestion d'un NS composite comprend : une interface de communication, configurée pour : recevoir une première demande d'opération de gestion de politique envoyée par une entité de décision de politique, et envoyer, au NFVO dans le domaine de gestion du NS imbriqué, une seconde demande d'opération de gestion de politique générée par un processeur ;
une mémoire, configurée pour stocker une instruction exécutable par ordinateur, un identifiant d'un groupe de politiques et un identifiant d'une politique membre comprise dans le groupe de politiques ; et
le processeur, connecté à la mémoire et à l'interface de communication à l'aide d'un bus et configuré pour : exécuter l'instruction exécutable par ordinateur dans la mémoire pour analyser la première demande d'opération de gestion de politique, et déterminer, sur la base de l'identifiant qui appartient au groupe de politiques et qui est compris dans la première demande d'opération de gestion de politique, un identifiant d'une politique de LCM qui appartient à un NS imbriqué et qui est compris dans le groupe de politiques, pour générer la seconde demande d'opération de gestion de politique, et envoyer la seconde demande d'opération de gestion de politique au NFVO dans le domaine de gestion du NS imbriqué par le biais de l'interface de communication, dans lequel la seconde demande d'opération de gestion de politique comprend l'identifiant de la politique de LCM du NS imbriqué, le groupe de politiques étant créé par le NFVO dans le domaine de gestion du NS composite sur la base d'une demande de l'entité de décision de politique ;
l'interface de communication est en outre configurée pour : recevoir un message de demande de création de groupe de politiques envoyé par l'entité de décision de politique, et renvoyer un message de réponse pour la demande de création de groupe de politiques à l'entité de décision de politique ; et
le processeur est en outre configuré pour exécuter l'instruction exécutable par ordinateur dans la mémoire afin de mettre en œuvre les fonctions suivantes : l'analyse du message de demande de création de groupe de politiques reçu, la création du groupe de politiques et l'attribution d'un identifiant au groupe de politiques, le message de demande de création de groupe de politiques comprenant l'identifiant de la politique membre dans le groupe de politiques, et la politique membre comprenant une politique de LCM d'un NS composite et des politiques de LCM d'un ou de plusieurs NS imbriqué(s) formant le NS composite ; et
la génération du message de réponse pour la demande de création de groupe de politiques, et l'envoi du message de réponse à l'entité de décision de politique par le biais de l'interface de communication, le message de réponse pour la demande de création de groupe de politiques comprenant l'identifiant du groupe de politiques.

9. Entité NFVO dans un domaine de gestion d'un NS composite selon la revendication 8, dans laquelle l'interface de communication est en outre configurée pour recevoir un message de demande de suppression de groupe de politiques envoyé par l'entité de décision de politique, le message de demande de suppression de groupe de politiques comprend un identifiant d'un groupe de politiques à supprimer, et le processeur supprime le groupe de politiques correspondant en fonction de l'identifiant du groupe de politiques.

10. Entité NFVO dans un domaine de gestion d'un NS composite selon la revendication 8 ou 9, dans laquelle un type d'opération de gestion de politique demandé dans la seconde demande d'opération de gestion de politique est le même qu'un type d'opération de gestion de politique demandé dans la première opération de gestion de politique, et comprend l'une des opérations de gestion de politique suivantes : la mise à jour de politique, la suppression de politique, l'activation de politique ou la désactivation de politique.

11. Système de gestion de politique, comprenant l'entité de décision de politique selon l'une quelconque des revendications 5 à 7 et l'entité d'orchestrateur de virtualisation des fonctions réseau, NFVO, dans un domaine de gestion d'un service de réseau, NS, composite selon l'une quelconque des revendications 8 à 10.

12. Support de stockage lisible par ordinateur, comprenant une instruction, dans lequel lorsque l'instruction s'exécute sur un ordinateur, l'ordinateur exécute le procédé lié à l'entité de décision de politique ou à l'entité d'orchestrateur de virtualisation des fonctions réseau, NFVO, dans un domaine de gestion d'un service de réseau, NS, composite selon les revendications 1 à 4.
